# EUROPEAN PATENT APPLICATION

(11) **EP 2 701 457 A1**
(43) Date of publication of application: **26.02.2014**
(21) Application number: 11863938.4
(22) Date of filing: 25.10.2011
(51) Int. Cl.: H04W 92/18, H04W 76/02, G06F 15/16, H04W 84/12

(54) **METHOD FOR CONNECTING PEER-TO-PEER APPLICATIONS OVER A WIRELESS LAN, AND METHOD FOR MAINTAINING A CONNECTION BETWEEN THE PEER-TO-PEER APPLICATIONS OVER THE WIRELESS LAN, AND WIRELESS LAN-BASED PEER TERMINAL**

(30) Priority: 21.04.2011 KR 20110037292
(71) Applicant: Itec Tokyo Corporation, Chiyoda-Ku, Tokyo (JP)
(72) Inventor: YOON, Ha Young, Siheung-si Gyeonggi-do 429-240 (KR); NA, Taek Kyun, Seoul 135-971 (KR)
(74) Representative: Capasso, Olga
(86) International application number: PCT/KR2011/007997
(87) International publication number: WO 2012/144707

(57) **Abstract**

A method for connecting peer-to-peer applications over a wireless LAN comprises the steps of: a peer terminal extracting application information from the peer-to-peer applications; the peer terminal generating service start information from the extracted application information; during a predetermined waiting time, the peer terminal determining whether or not at least one other peer terminal corresponding to the service start information exists; and setting the terminal having the highest leader pseudo-measurement as a leader terminal and setting the other terminals as member terminals based on a leader pseudo-measurement included in the service start information and a leader pseudo-measurement received from the or each other peer terminal when at least one other peer terminal corresponding to the service start information exists. Therefore, the present invention has the effect of being able to automatically and quickly connect the peer-to-peer applications over the wireless LAN.

## Description

### [Technical Field]

The present invention relates to a connection between peer-to-peer applications, and more particularly, to a method for a wireless local area network (WLAN)-based peer-to-peer connection, a method of maintaining a WLAN-based peer-to-peer connection, and a WLAN-based peer terminal that easily and securely discover and connect a peer terminal present within a transmission area of a WLAN-based peer.

### [Background Art]

Peer-to-peer refers to a technology of sharing digital resources between peer terminals through a direct exchange without using a server. A peer-to-peer service may include a message, sharing of music, sharing of files, sharing of user created content (UCC), multimedia streaming, and the like. In wireless local area network (WLAN)-based peer-to-peer, the peer-to-peer technology is applied to a wireless terminal such as a mobile phone. In a wireless peer-to-peer environment, an on-demand data distribution technology is an element technology that is essential in a ubiquitous environment.

The existing WLAN-based peer-to-peer is performed in an order of an operation of connecting a network between WLAN terminals in which an application is installed, an operation of driving a peer-to-peer application, an operation of mutually discovering and setting up a call between peer-to-peer peer terminals, and an operation of operating a peer-to-peer application (sharing of files, a messaging service, and the like). A complex procedure before the operation of operating the peer-to-peer application as above has an issue of not stably connecting between WLAN-based peer-to-peer applications.

A connection between WLAN-based peer-to-peer applications in a mobile environment needs to be frequently performed without restrictions on a time and a place and thus, the issue that the connectivity between the WLAN-based peer-to-peer applications is decreased due to the complex procedure before the operation of operating the peer-to-peer application becomes further aggravated.

Also, a conventional universal plug & play (UPnP) protocol and Bonjour protocol that support discovery and connection between peers need to go through a networking connection operation, an operation of browsing a peripheral device, an operation of selecting a terminal to be connected, and a connection operation, and also need to go through a procedure including four operations as above even in the case of connecting a Bluetooth-based application in which a type of a wireless peer-to-peer is profiled.

The connection complexity between the peer-to-peer applications as above becomes further aggravated in a situation in which different peer-to-peer applications are concentrated, such as a populated area and thus, it is difficult to connect to a desired terminal quickly between users.

In general, a plurality of peer terminals configured to drive the same peer-to-peer application have a topology in which a single entity peer (leader or registrar) terminal is connected to another peer (member) terminal or a supplicant terminal for secure connection.

A distributive peer discovery method for multimedia data transmission in a wireless peer-to-peer network (Korean Patent Publication No. 10-2010-0089238) was filed. However, the distributive peer discovery method guarantees quality of service (QoS) and considers a capacity of an idle buffer and a remaining battery amount in the case of transmitting multimedia data in a wireless peer-to-peer network. Accordingly, when the leader terminal is excluded from the topology, a connection between already connected peer terminals is impossible.

For reference, wireless fidelity (WiFi) positioning system/WiFi protected access2 (WPS/WPA2) that is a WiFi-based WLAN secure connection standard has not defined countermeasures against a case in which an access point (AP) in which a registrar is being driven suddenly disappears on a network.

### [Disclosure]

### [Technical Problem]

The present invention has been made in an effort to provide a method for a connection between peer-to-peer applications based on a wireless local area network (WLAN) that quickly automates a connection between WLAN peer-to-peer applications.

Another object of the present invention also provides a method for maintaining a WLAN-based peer-to-peer connection that enables a topology between already connected WLAN peer-to-peer applications to be maintained even though a leader terminal is absent.

Still another object of the present invention also provides a WLAN-based peer terminal that quickly automates a connection between WLAN peer-to-peer applications and enables a topology between already connected WLAN peer-to-peer applications to be maintained even though a leader terminal is absent.

### [Technical Solution]

An exemplary embodiment of the present invention provides a method for a peer-to-peer connection based on a wireless local area network (WLAN), the method including: extracting, by a peer terminal, application information from a peer-to-peer application; generating, by the peer terminal, service start information from the extracted application information; determining, by the peer terminal, whether at least one another peer terminal corresponding to the service start information is present during a predetermined standby time; and setting a terminal having the highest leader pseudo-measurement as a leader terminal and setting a remaining terminal as a member terminal based on a leader pseudo-measurement included in the service start information and a leader pseudo-measurement received from each of the at least one other peer terminal when the at least one other peer terminal corresponding to the service start information is present. Here, the application information may include at least one of a unique tag of the peer-to-peer application, an information protection ID, an application driving time point, an application driving place, and a numerical value of a terminal operation state. Here, the leader pseudo-measurement may be generated to be high in at least one of a case in which the number of CPU clocks of the peer terminal is large, a case in which a remaining battery amount is large, and a case in which the peer terminal is continuously supplied with power. Here, the service start information may include at least one of a call setup channel, a service tag, and an information protection certificate in addition to the leader pseudo-measurement. Here, the determining, by the peer terminal, whether at least one another peer terminal corresponding to the service start information is present during a predetermined standby time may determine that the at least one other peer terminal corresponding to the service start information is present when at least one of the call setup channel, the service tag, and the information protection certificate is identical to a call setup channel, a service tag, and an information protection certificate of the at least one other peer terminal. Here, the determining, by the peer terminal, whether at least one another peer terminal corresponding to the service start information is present during a predetermined standby time determines may further include: setting the peer terminal as the leader terminal when the at least one other peer terminal corresponding to the service start information is absent; determining whether the at least one other peer terminal corresponding to the service start information is connected after setting the peer terminal as the leader terminal; and setting the terminal having the highest leader pseudo-measurement as the leader terminal and setting the remaining terminal as the member terminal based on a leader pseudo-measurement included in the service start information and a leader pseudo-measurement received from each of the at least one other peer terminal when the at least one other peer terminal is connected. Here, the setting the peer terminal having the highest leader pseudo-measurement as the leader terminal may set a predetermined terminal as the leader terminal and set the other terminal as the member terminal when at least two terminals having the same leader pseudo-measurement are present.

Another exemplary embodiment of the present invention provides a method of maintaining a connection between peer-to-peer applications based on a WLAN, the method including: determining, by a leader terminal, a leader migration, receiving a leader pseudo-measurement from each of a plurality of member terminals, and selecting a member terminal having the highest leader pseudo-measurement based on the received leader pseudo-measurements when explicit termination of a leader is sensed; transmitting, by the leader terminal, a leader acceptance request message to the member terminal having the highest leader pseudo-measurement, and determining whether a leader acceptance message is received in response to the leader acceptance request message; and providing, by the leader terminal, information used for a current connection to the member terminal having the highest leader pseudo-measurement when the leader acceptance message is received. Here, sensing the explicit termination of the leader may be sensed as the explicit termination of the leader in at least one of a case in which a signal-to-interference and noise ratio (SINR) of the leader terminal is less than or equal to a predetermined value, a case in which a battery amount of the leader terminal is less than or equal to a predetermined value, and a case in which a peer-to-peer application of the leader terminal is terminated. Here, the determining whether the leader acceptance message is received may further include: selecting a member terminal having a second highest leader pseudo-measurement when the leader acceptance message is not received; transmitting the leader acceptance request message to the member terminal having the second highest leader pseudo-measurement, and determining whether the leader acceptance message is received in response to the leader acceptance request message; and providing information used for a current connection to the member terminal having the second highest leader pseudo-measurement when the leader acceptance message is received.

Also, still another exemplary embodiment of the present invention provides a method of maintaining a connection between peer-to-peer applications based on a WLAN including a leader terminal and a plurality of member terminals, the method including: determining, by a member terminal, whether a beacon signal is received from the leader terminal within a predetermined period of time; cancelling, by the member terminal, a connection with the leader terminal and determining whether at least one another member terminal corresponding to service start information of the member terminal is present during a predetermined standby time when the beacon signal is not received within the predetermined period of time; and setting a terminal having the highest leader pseudo-measurement as the leader terminal based on a leader pseudo-measurement included in the service start information and a leader pseudo-measurement received from each of the at least one other member terminal when the at least one other member terminal corresponding to the service start information is present.

Yet another exemplary embodiment of the present invention provides a WLAN-based peer terminal including a control unit and a communication unit, the peer terminal including: a control unit configured to extract application information from a peer-to-peer application, generate service start information from the extracted application information, determine whether at least one another peer terminal corresponding to the service start information is present during a predetermined standby time through a communication unit, and set a peer terminal having the highest leader pseudo-measurement as a leader terminal based on a leader pseudo-measurement included in the service start information and a leader pseudo-measurement received from each of the at least one other peer terminal when the at least one other peer terminal corresponding to the service start information is present; and a communication unit configured to receive the service start information from the control unit, receive information regarding whether the at least one other peer terminal corresponding to the service start information is present, and provide the received information to the control unit. Here, the leader pseudo-measurement may be generated to be high in at least one of a case in which the number of CPU clocks of the WLAN-based peer terminal is large, a case in which a remaining battery amount is large, and a case in which the peer terminal is continuously supplied with power. Here, the service start information may include at least one of a call setup channel, a service tag, and an information protection certificate in addition to the leader pseudo-measurement. When at least one of the call setup channel, the service tag, and the information protection certificate is identical to a call setup channel, a service tag, and an information protection certificate of the at least one other peer terminal, the control unit may determine that the at least one other peer terminal corresponding to the service start information is present. Here, when the at least one other peer terminal corresponding to the service start information is absent, the control unit may determine whether the at least one other peer terminal corresponding to the service start information is connected after setting the peer terminal as the leader terminal through the communication unit, set the terminal having the highest leader pseudo-measurement as the leader terminal and set a remaining terminal as a member terminal based on a leader pseudo-measurement included in the service start information and a leader pseudo-measurement received from each of the at least one other peer terminal through the communication unit when the at least one other peer terminal is connected. Here, the control unit may determine a leader migration, receive a leader pseudo-measurement from each of the plurality of member terminals, and select a member terminal having the highest leader pseudo-measurement based on the received leader pseudo-measurements when explicit termination of a leader is sensed while the peer terminal is performing a function of the leader terminal, and transmit a leader acceptance request message to the member terminal having the highest leader pseudo-measurement through the communication unit, and provide information used for a current connection to the member terminal having the highest leader pseudo-measurement through the communication unit when a leader acceptance message is received in response to the leader acceptance request message. Here, sensing the explicit termination of the leader may be sensed as the explicit termination of the leader in at least one of a case in which an SINR of the peer terminal is less than or equal to a predetermined value, a case in which a battery amount of the peer terminal is less than or equal to a predetermined value, and a case in which a peer-to-peer application of the peer terminal is terminated. Here, the control unit may cancel a connection with the leader terminal and determines whether at least one another peer terminal corresponding to the service start information is present during a predetermined standby time when the peer terminal is performs a function of a member terminal and when a beacon signal is not received from the leader terminal within a predetermined period of time, and may set a terminal having the highest leader pseudo-measurement as the leader terminal based on a leader pseudo-measurement included in the service start information and a leader pseudo-measurement received from each of the at least one other member terminal when the at least one other peer terminal corresponding to the service start information is present.

### [Advantageous Effects]

A method for a connection between peer-to-peer applications based on a wireless local area network (WLAN) according to exemplary embodiments of the present invention may quickly perform a connection between WLAN peer-to-peer applications in such a manner that a peer terminal generates service start information using application information extracted from a peer-to-peer application and a connection is performed by automatically determining whether at least one another peer terminal corresponding to the service start information is present within an operating channel or a transmission radius.

### [Description of Drawings]

FIG. 1 is a flowchart illustrating a method for a connection between peer-to-peer applications based on a wireless local area network (WLAN) according to an exemplary embodiment of the present invention.
FIG. 2 illustrates an example of extracting service start information through a hash function in a method for a connection between peer-to-peer applications based on a WLAN according to an exemplary embodiment of the present invention.
FIG. 3 is a flowchart illustrating a leader migration process in the case of explicit termination of a leader in a method of maintaining a connection between peer-to-peer applications based on a WLAN according to an exemplary embodiment of the present invention.
FIG. 4 is a flowchart illustrating a leader reselection process in the case of implicit termination of a leader in a method of maintaining a connection between peer-to-peer applications based on a WLAN according to an exemplary embodiment of the present invention.
FIG. 5 is a flowchart illustrating an automatic connection process between peers executing the same application on wireless fidelity (WiFi)-Direct according to an exemplary embodiment of the present invention.
FIG. 6 is a flowchart illustrating a leader migration process in the case of explicit termination of a leader on WiFi-Direct according to an exemplary embodiment of the present invention.
FIG. 7 is a flowchart illustrating a leader reselection process in the case of implicit termination of a leader on WiFi-Direct according to an exemplary embodiment of the present invention.
FIG. 8 illustrates a configuration of a WLAN-based peer terminal according to an exemplary embodiment of the present invention.
FIG. 9 illustrates a result of evaluating the performance of a method for a connection between peer-to-peer applications based on a WLAN according to an exemplary embodiment of the present invention.

### [Best Mode]

The present invention may be variously modified and may have various exemplary embodiments and thus, predetermined exemplary embodiments are illustrated in drawings and will be described in detail in the detailed description. However, it is not intended to limit the present invention to the predetermined exemplary embodiment and thus, it should be understood to include all of the modifications, equivalents, and substitutions included in the spirit and technical range of the present invention. Like reference numerals refer to like constituent elements in describing each drawing.

Terms, such as "first", "second", and the like, may be used to describe various constituent elements. However, the constituent elements should not be limited by the terms. The terms are used only to distinguish a single constituent element from another constituent element. For example, without departing from the scope of the present invention, a first constituent element may be referred to as a second constituent element. Similarly, a second constituent element may also be referred to as a first constituent element. Term "and/or" includes a combination of a plurality of relevant described items or any one item among a plurality of relevant described items.

When it is described that a predetermined constituent element is "connected to" or "accessed to" another constituent element, the predetermined constituent element may be directly connected to or accessed to the other constituent element, however, should be understood that still another constituent element may be present between the predetermined constituent element and the other constituent element. On the other hand, when it is described that the predetermined constituent element is "directly connected to" or "directly accessed to" the other constituent element, it should be understood that still another constituent element is absent between the predetermined constituent element and the other constituent element.

Terms used in the present application are used to describe a predetermined exemplary embodiment and are not intended to limit the present invention. Unless particularly described in the sentence, a singular expression may also include a plural expression. Terms "includes (comprises)" or "has" used in the present application are to designate the presence of a feature, a number, a step, an operation, a constituent element, and a part described in the present specification, or a combination thereof, and should be understood not to exclude the presence or addition probability of one or more other features, numbers, steps, constituent elements, parts, or a combination thereof.

Hereinafter, exemplary embodiments of the present invention will be described in detail with reference to the accompanying drawings. Hereinafter, like reference numerals refer to like constituent elements on the drawings and a repeated description related to the same constituent element is omitted.

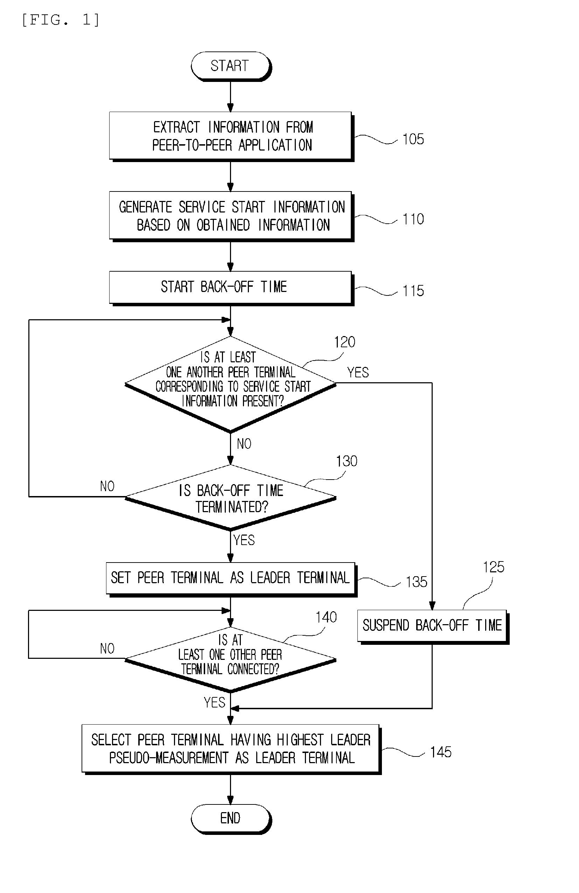

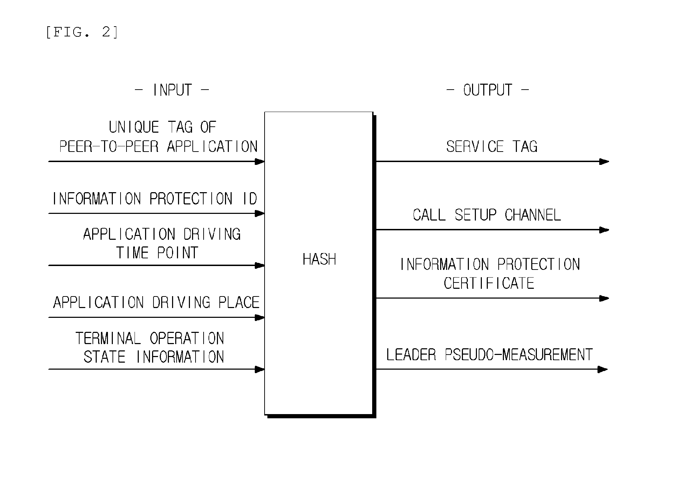

FIG. 1 is a flowchart illustrating a method for a connection between peer-to-peer applications based on a wireless local area network (WLAN) according to an exemplary embodiment of the present invention, and FIG. 2 illustrates an example of generating service start information through a hash function in a method for a connection between peer-to-peer applications based on a WLAN according to an exemplary embodiment of the present invention.

Referring to FIGS. 1 and 2, a peer terminal extracts application information from a peer-to-peer application (operation 105).

Here, the application information to be extracted may include a unique tag of the peer-to-peer application, an information protection ID, an application driving time point, an application driving place, and a numerical value of a terminal operation state.

Initially, the unique tag of the peer-to-peer application may include a unique ID of an application, a unique content ID of the application, and a manufacturer ID of a terminal. When the unique tag of the peer-to-peer application is absent, a wildcard value is used. Also, different applications have different unique IDs. However, even the same applications have different unique IDs when sharing content IDs of the applications are different.

Here, when a predetermined peer-to-peer application is to interwork regardless of the manufacturer ID of the terminal, a hash function may be applied by setting the manufacturer ID to an initial value.

The information protection ID may include a personal identification number (PIN) or a character string settable by a user. When the information protection ID is absent, a wildcard value is used.

Here, the information protection ID indicates, for example, a password in the case of a file sharing application. Also, in the case of using the information protection ID, only a user having the same ID may be discovered.

Accordingly, the same P2P applications may be easily and securely discovered and connected through the information protection ID.

The application driving time point may be configured as a code in which a current time is digitalized to a week, a day, an hour, or a minute. When the application driving time point is not set, a wildcard value is used. Also, the application driving time point is used to automatically select a peer to connect based on the application driving time point.

The application driving place may use global positional system (GPS) coordinates (for example, a digitalized code such as Seoul-si Gangnam-gu->00100), and may use relative coordinates (for example, an access point (AP) address having the highest signal strength in a neighboring WLAN AP list) in the case of the absence of a GPS.

The numerical value of the terminal operation state may include measurement information (for example, the number of CPU clocks and the like) of an operation performance capability of a current terminal and a state (for example, a remaining battery amount, a power supply state, a signal-to-interference and noise ratio (SINR), and the like) of the current terminal. When the numerical value of the terminal operation state is absent, a default value is used.

The peer terminal generates service start information by applying the hash function to the application information extracted in operation 105 (operation 110).

Here, the generated service start information may include a service tag, a call setup channel, an information protection certificate, and a leader pseudo-measurement.

The service tag and the information protection certificate correspond to service information, and may be generated based on the unique tag of the peer-to-peer application, the information protection ID, the application driving time point, and the application driving place in the application information input to the hash function.

Also, the call setup channel may be generated based on the unique tag of the peer-to-peer application and the application driving time point in the application information input to the hash function, and the leader pseudo-measurement may be generated based on terminal operation state information in the application information input to the hash function.

Here, the leader pseudo-measurement is generated to be high according to an increase in the number of CPU clocks, an increase in a remaining battery amount, and in a case in which power is continuously supplied.

Also, the peer terminal proposed for the quick connection may prevent a terminal from hopping a plurality of call setup channel in the case of connecting applications by limiting a call setup channel of the terminal. Also, in a case in which information protection IDs are different, even though the same application is executed, the service tag and the information protection certificate are set to be different.

When the service start information is generated in operation s110, the peer terminal independently determines a predetermined standby time (back-off time) and starts the determined back-off time (operation 115).

Here, the back-off time refers to a timer that produces a linear output with respect to a currently set leader pseudo-measurement.

The peer terminal starts the back-off time in operation 115 and then determines whether at least one another peer terminal corresponding to the service start information of the peer terminal is present (operation 120).

Here, determining whether the at least one other peer terminal corresponding to the service start information is present may determine that the at least one other peer terminal corresponding to the service start information is present when at least one of the call setup channel, the service tag, and the information protection certificate is identical to a call setup channel, a service tag, and an information protection certificate of the at least one other peer terminal.

When the at least one other peer terminal corresponding to the service start information of the peer terminal is determined to be present in operation 120, the peer terminal suspends the back-off time (operation 125).

Here, when the at least one other peer terminal corresponding to the service start information of the peer terminal is determined to be absent in operation 120, the peer terminal determines whether the back-off time is terminated (operation 130). When the back-off time is terminated, the peer terminal sets the peer terminal as a leader terminal and waits for a connection of at least one another peer terminal (operation 135).

Next, the peer terminal set as the leader terminal determines whether the at least one other peer terminal corresponding to the service start information is connected (operation 140).

When the at least one other peer terminal corresponding to the service start information of the peer terminal is present or connected through operation 120 or 140, the peer terminal receives and thereby compares a leader pseudo-measurement from each of the at least one other peer terminal and then sets a peer terminal having the highest leader pseudo-measurement as the leader terminal (operation 145) and sets a remaining peer terminal as a member terminal.

Here, when at least two peer terminals having the same leader pseudo-measurement are present, the peer terminal having the highest leader pseudo-measurement is extracted by continuously resetting the leader pseudo-measurement until the same leader pseudo-measurement does not occur using a random number generation algorithm and the extracted peer terminal is set as the leader terminal.

Also, a messaging service, sharing of music, sharing of files, sharing of UCC, multimedia streaming, and the like are performed between the set leader terminal and member terminal. Here, a connection of applications having different service tags is restricted even though the applications are present in the same channel.

Here, communication between terminals may be performed using various wireless communication technologies, such as 802.11x (for example, 802.11a, 802.11b, 802.11g, 802.11n, 802.11ac, and the like), Bluetooth, ZigBee, ultra wideband (UWB), near field communication (NFC), binary code division multiple access (B-CDMA: Binary Division Multiple Access), and the like.

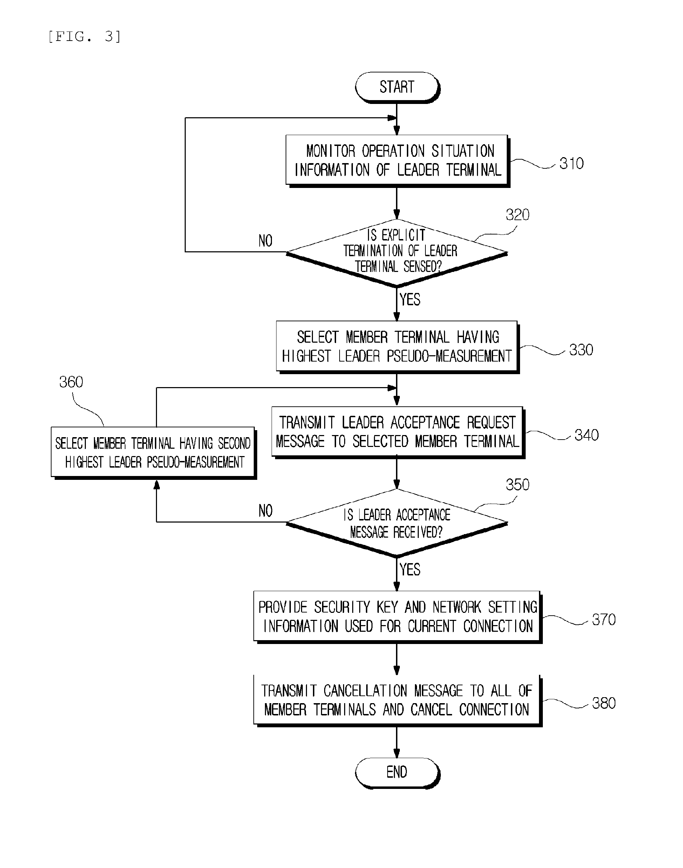

FIG. 3 is a flowchart illustrating a leader terminal migration process in the case of explicit termination of a leader in a method of maintaining a connection between peer-to-peer applications based on a WLAN according to an exemplary embodiment of the present invention.

Here, it is assumed that at least three peer terminals executing the same peer-to-peer application are connected and a user peer terminal is a leader terminal.

Referring to FIG. 3, the leader terminal monitors operation situation information of the leader terminal (operation 310). Here, the operation situation information may include, for example, an SINR, a battery capacity, peer-to-peer application operation information, and the like.

The leader terminal determines whether explicit termination of the leader terminal is sensed while monitoring operation situation information of the leader terminal in operation 310 (operation 320).

Here, a case in which the explicit termination of the leader terminal is sensed includes, for example, a case in which an SINR of the leader terminal is less than or equal to a predetermined value due to a far distance between member terminals, a case in which the battery capacity of the leader terminal is less than or equal to a predetermined value, a case in which a peer-to-peer application of the leader terminal is terminated, and the like.

When the explicit termination of the leader terminal is sensed in operation 320, the leader terminal determines a leader migration and receives a leader pseudo-measurement from each of the plurality of member terminals and then selects a member terminal having the highest leader pseudo-measurement based on the received leader pseudo-measurements (operation 330).

Here, the leader pseudo-measurement is generated to be high according to an increase in the number of CPU clocks, an increase in a remaining battery amount, and in a case in which power is continuously supplied.

When the member terminal having the highest leader pseudo-measurement is selected in operation 330, the leader terminal transmits a leader acceptance request message to the selected member terminal (operation340) and determines whether a leader acceptance message is received in response to the leader acceptance request message (operation 350).

When the leader acceptance message is not received in operation 350, the leader terminal selects a member terminal having a second highest leader pseudo-measurement (operation360), and performs again operations 340 and 350.

When the leader acceptance message is received in response to the leader acceptance request message in operation 350, the leader terminal provides a security key and network setting information used for a current connection, to the member terminal having transmitted the leader acceptance message (operation 370).

Next, the leader terminal transmits a connection cancellation message to all of the member terminals and cancels the connection (operation 380).

Here, communication between terminals may be performed using various wireless communication technologies such as 802.11x (for example, 802.11a, 802.11b, 802.11g, 802.11n, 802.11ac, and the like), Bluetooth, ZigBee, UWB, NFC, B-CDMA, and the like.

As described above, in a case in which the leader terminal is explicitly terminated, a topology between already connected WLAN peer-to-peer applications may be maintained through migration of a leader and thus, it is possible to solve the conventional issue that the already connected peer-to-peer connection is disconnected when the leader terminal is excluded from the topology.

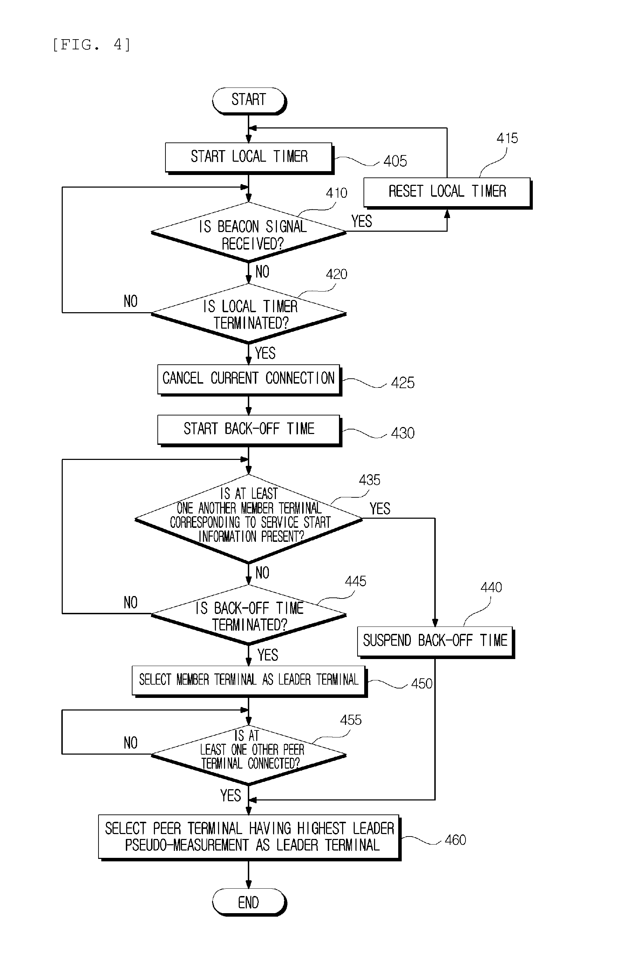

FIG. 4 is a flowchart illustrating a leader reselection process in the case of implicit termination of a leader terminal in a method of maintaining a connection between peer-to-peer applications based on a WLAN according to an exemplary embodiment of the present invention.

Here, it is assumed that at least three peer terminals executing the same peer-to-peer application are connected and a user peer terminal is a member terminal.

Referring to FIG. 4, when the member terminal is connected to a leader terminal, the member terminal starts a local timer (operation 405) and determines whether a beacon signal is received from the leader terminal (operation 410).

Here, starting the local timer is to determine the implicit termination of the leader terminal (for example, sudden power down of the leader terminal, a network partition by a relocation of the leader terminal, and the like).

Here, the beacon signal indicates a signal periodically broadcasted by the leader terminal in order to inform the presence of the leader terminal.

When the beacon signal is received from the leader terminal in operation 410, the member terminal resets the local timer (operation 415) and performs again operations 405 and 410.

When the beacon signal is not received from the leader terminal in operation 410, the member terminal determines whether the local timer is terminated (operation 420). When the beacon signal is not received from the leader terminal until the local timer is terminated, the member terminal cancels the connection with the leader terminal (operation 425) and starts a back-off time (operation 430).

Here, the back-off time refers to a time that produces a linear output with respect to a currently set leader pseudo-measurement.

The member terminal starts the back-off time in operation 430 and then determines whether at least one another member terminal corresponding to service start information of the member terminal is present (operation 435).

Here, determining whether the at least one other member terminal corresponding to the service start information is present may determine that the at least one other member terminal corresponding to the service start information is present when at least one of the call setup channel, the service tag, and the information protection certificate is identical to at least one of a call setup channel, a service tag, and an information protection certificate of the at least one other member terminal.

When the at least one other member terminal corresponding to the service start information of the member terminal is determined to be present in operation 435, the member terminal suspends the back-off time (operation 440).

Here, when the at least one other member terminal corresponding to the service start information of the member terminal is determined to be absent in operation 435, the member terminal determines whether the back-off time is terminated (operation 445). When the back-off time is terminated, the member terminal sets the member terminal as the leader terminal and waits for a connection of at least one another member terminal (operation 450).

Next, the member terminal set as the leader terminal determines whether the at least one other member terminal corresponding to the service start information is connected (operation 455).

When the at least one other member terminal corresponding to the service start information of the member terminal is present or when the at least one other peer terminal is connected through operation 435 or 455, the member terminal receives and thereby compares a leader pseudo-measurement from each of the at least one other member terminal or the at least one other peer terminal and then sets, as the leader terminal, a terminal having the highest leader pseudo-measurement (operation 460) and sets a remaining terminal as the member terminal.

Here, the leader pseudo-measurement is generated to be high according to an increase in the number of CPU clocks, an increase in a remaining battery amount, and in a case in which power is continuously supplied.

Here, when at least two terminals having the same leader pseudo-measurement are present, the terminal having the highest leader pseudo-measurement is extracted by continuously resetting the leader pseudo-measurement until the same leader pseudo-measurement does not occur using a random number generation algorithm and the extracted terminal is set as the leader terminal. The remaining terminal aside from the leader terminal is set as the member terminal.

Here, a messaging service, sharing of music, sharing of files, sharing of UCC, multimedia streaming, and the like are performed between the set leader terminal and member terminal. Here, a connection of applications having different service information is restricted even though the applications are present in the same channel.

Here, communication between terminals may be performed using various wireless communication technologies such as 802.11x (for example, 802.11a, 802.11b, 802.11g, 802.11n, 802.11ac, and the like), Bluetooth, ZigBee, UWB, NFC, B-CDMA, and the like.

As described above, in a case in which the leader terminal is implicitly terminated, a topology between already connected WLAN peer-to-peer applications may be maintained through reselection of a leader and thus, it is possible to solve the conventional issue that the already connected peer-to-peer connection is disconnected when the leader terminal is excluded from the topology.

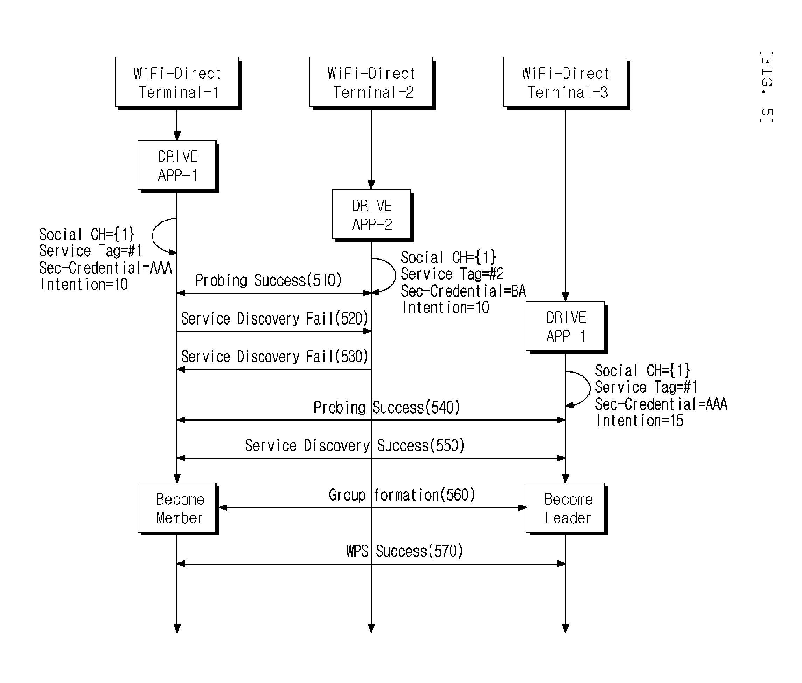

FIG. 5 is a flowchart illustrating an automatic connection process between peers executing the same application on wireless fidelity (WiFi)-Direct according to an exemplary embodiment of the present invention.

Referring to FIG. 5, a WiFi-Direct terminal 1(hereinafter, referred to as a terminal 1) and a WiFi-Direct terminal 3(hereinafter, referred to as a terminal 3) drive a peer-to-peer application-1, and a WiFi-Direct terminal 2 (hereinafter, referred to as a terminal 2) drives a peer-to-peer application-2.

Here, each terminal initially extracts application information from an application being driven, and generates service start information (a call setup channel, a service tag, an information protection certificate, and a leader pseudo-measurement) by applying a hash function to the extracted application information.

Here, the leader pseudo-measurement is generated to be high according to an increase in the number of CPU clocks, an increase in a remaining battery amount, and in a case in which power is continuously supplied.

The terminal 1 succeeds in probing the terminal 2 present in the same call setup channel as the terminal 1 (510). Here, service information, that is, a service tag of the terminal 1 is #1 and an information protection certificate thereof is AAA. A service tag of the terminal 2 is #2 and an information protection certificate thereof is BA. Accordingly, the service information of the terminal 1 is different from the terminal 2 and thus, the terminal 1 fails in a connection (520 and 530).

Next, the terminal 1 succeeds again in probing the terminal 3 present in the same call setup channel as the terminal 1 (540).

The terminal 1 and the terminal 3 have a service tag of #1 and an information protection certificate of AAA and thus, have the same service information and thus, succeed in an automatic connection (550).

The terminal 1 succeeding in the automatic connection receives and thereby compares a leader pseudo-measurement from the terminal 3 and then sets the terminal 3 having the highest leader pseudo-measurement as a leader terminal and sets the terminal 1 having a low leader pseudo-measurement as a member terminal (560).

Here, when the terminal 1 and the terminal 3 have the same leader pseudo-measurement, a peer terminal having the highest leader pseudo-measurement is extracted by continuously resetting the leader pseudo-measurement until the same leader pseudo-measurement does not occur using a random number generation algorithm and the extracted peer terminal is set as the leader terminal.

Next, a messaging service, sharing of music, sharing of files, sharing of UCC, multimedia streaming, and the like are performed between the terminal 1 and the terminal 3 (570).

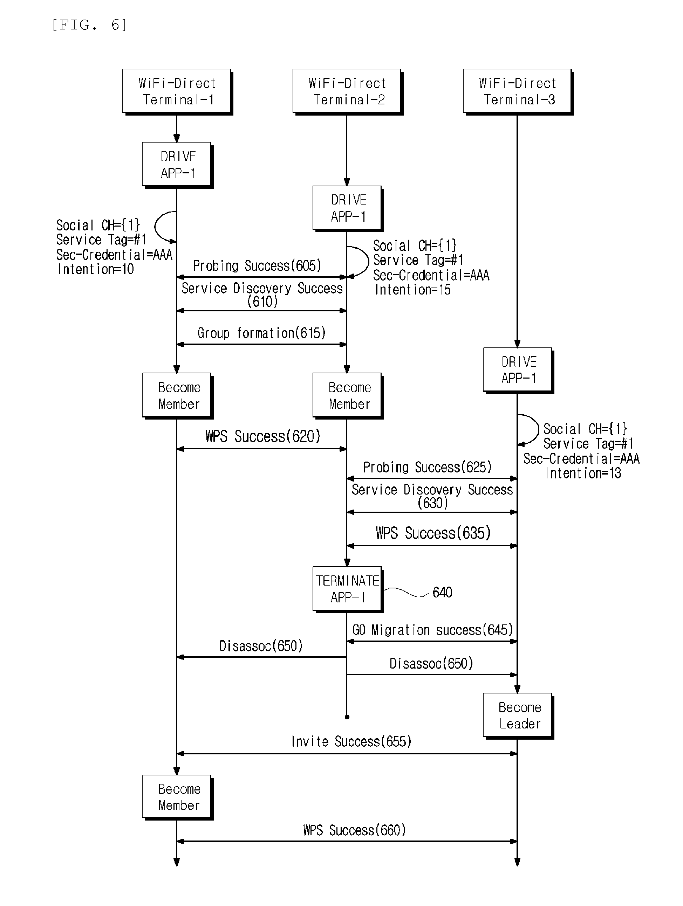

FIG. 6 is a flowchart illustrating a leader migration process in the case of explicit termination of a leader on WiFi-Direct according to an exemplary embodiment of the present invention.

Referring to FIG. 6, a terminal 1, a terminal 2, and a terminal 3 have the same call setup channel of {1}, service tag of #1, and information protection certificate of AAA.

Here, each terminal extracts application information from an application being driven, and generates service start information (a call setup channel, a service tag, an information protection certificate, and a leader pseudo-measurement) by applying a hash function to the extracted application information.

Here, the leader pseudo-measurement is mapped to be high according to an increase in the number of CPU clocks, an increase in a remaining battery amount, and in a case in which power is continuously supplied.

The terminal 1 succeeds in probing the terminal 2 present in the same call setup channel as the terminal 1 (605). The terminal 1 and the terminal 2 have the same service information (the service tag and the information protection certificate) and thus, succeed in an automatic connection (610), and receive and thereby compare a leader pseudo-measurement from a mutual terminal. Accordingly, the terminal 2 having a high leader pseudo-measurement is set as a leader terminal, and the terminal 1 is set as a member terminal (615).

Next, a messaging service, sharing of music, sharing of files, sharing of UCC, multimedia streaming, and the like are performed between the terminal 1 and the terminal 2 (620).

The terminal 2 is the leader terminal and succeeds in probing the terminal 3 present in the same call setup channel as the terminal 2 (625), has the same service information and thus succeeds in an automatic connection (630). Next, the terminal 3 becomes a member terminal and performs a messaging service, sharing of music, sharing of files, sharing of UCC, multimedia streaming, and the like with the terminal 1 and/or the terminal 2 (635).

When the terminal 2 senses termination of an application-1 of the leader terminal while performing a role of the leader terminal (640), the terminal 2 performs a leader migration by providing a security key and network setting information used for current connection, a member list, and the like to the terminal 3 having a high leader pseudo-measurement (645).

Here, a case in which the leader terminal is determined to be explicitly terminated includes a case in which an application of the leader terminal is terminated, a case in which an SINR of the leader terminal is less than or equal to a predetermined value due to a far distance between the leader terminal and the member terminal, a case in which the battery capacity of the leader terminal is less than or equal to a predetermined value while performing communication, and the like.

Next, the terminal 2 transmits a connection cancellation message to the terminal 1 and the terminal 3, and cancels the connection with the terminal 1 and the terminal 3 (650).

The terminal 3, newly selected as the leader terminal, sets the terminal 3 itself as the leader terminal and invites the terminal 1 (655), resets a WiFi connection and then performs sharing of files and the like (660).

As described above, in a case in which the terminal 2 that was the leader terminal is explicitly terminated, a topology between already connected WLAN peer-to-peer applications may be maintained by migrating a leader to the terminal 3 and thus, it is possible to solve the conventional issue that the already connected peer-to-peer connection is disconnected when the leader terminal is excluded from the topology.

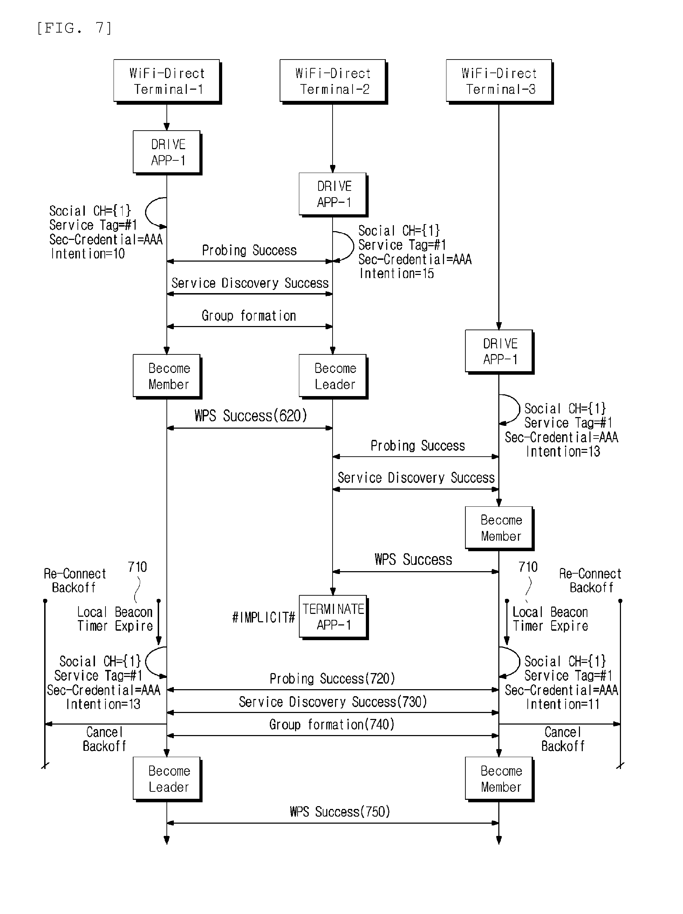

FIG. 7 is a flowchart illustrating a leader reselection process in the case of implicit termination of a leader on WiFi-Direct according to an exemplary embodiment of the present invention.

Referring to FIG. 7, a terminal 1, a terminal 2, and a terminal 3 have the same call setup channel of {1}, service tag of #1, and information protection certificate of AAA.

Here, each terminal extracts application information from an application being driven, and generates service start information (a call setup channel, a service tag, an information protection certificate, and a leader pseudo-measurement) by applying a hash function to the extracted application information.

Here, the leader pseudo-measurement is mapped to be high according to an increase in the number of CPU clocks, an increase in a remaining battery amount, and in a case in which power is continuously supplied.

A process in which the terminal 2 succeeds in an automatic connection with the terminal 1 and the terminal 3, and the terminal 2 as a leader terminal and the terminal 1 and the terminal 3 as member terminals perform a messaging service, sharing of music, sharing of files, sharing of UCC, multimedia streaming, and the like is described above with reference to FIG. 6 and thus, further description related thereto will be omitted hereinafter.

When the terminal 1 and the terminal 3 that are member terminals are connected to the terminal 2 that is the leader terminal, the terminal 1 and the terminal 3 start a local timer and determine whether a beacon signal is received from the terminal 2.

Here, the terminal 1 and the terminal 3 drive the local timer in order to determine implicit termination of the terminal 2 (for example, sudden power down of the terminal 2, a network partition by a relocation of the leader terminal, and the like).

When the beacon signal is not received from the terminal 2 until the local timer is terminated, the terminal 1 and the terminal 3 cancel the connection with the terminal 2 and start a back-off time (710).

The terminal 1 and the terminal 3 succeed in probing each other present in the same call setup channel (720), have the same service information and thus, succeed in an automatic connection (730). Also, after receiving and thereby comparing a leader pseudo-measurement from a terminal of a server, the terminal 1 having a high leader pseudo-measurement is set as the leader terminal and the terminal 3 having a low leader pseudo-measurement is set as the member terminal (740). Next, the terminal 1 and the terminal 3 perform a messaging service, sharing of music, sharing of files, sharing of UCC, multimedia streaming, and the like (750).

As described above, in a case in which the leader terminal is implicitly terminated, a topology between already connected WLAN peer-to-peer applications may be maintained through reselection of a leader and thus, it is possible to solve the conventional issue that the already connected peer-to-peer connection is disconnected when the leader terminal is excluded from the topology.

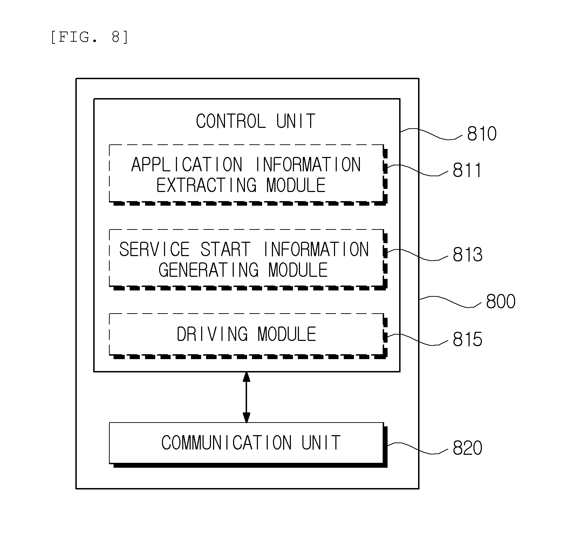

FIG. 8 illustrates a configuration of a WLAN-based peer terminal according to an exemplary embodiment of the present invention.

Referring to FIG. 8, the WLAN-based peer terminal according to an exemplary embodiment of the present invention may include a control unit 810 and a communication unit 820.

Here, the control unit 810 may include an application information extracting module 811, a service start information generating module 813, and a driving module 815.

Initially, the application information extracting module 811 extracts application information from a peer-to-peer application. Here, the application information to be extracted may include a unique tag of the peer-to-peer application, an information protection ID, an application driving time point, an application driving place, and a numerical value of a terminal operation state.

The unique tag of the peer-to-peer application may include a unique ID of an application, a unique content ID of the application, and a manufacturer ID of a terminal. When the unique tag of the peer-to-peer application is absent, a wildcard value is used. Also, different applications have different unique IDs. However, even the same applications have different unique IDs when sharing content IDs of the applications are different.

Here, when a predetermined peer-to-peer application is to interwork regardless of the manufacturer ID of the terminal, interworking may be performed by setting the manufacturer ID to an initial value and thereby applying the manufacturer ID to a hash function.

The information protection ID may include a PIN number or a character string settable by a user. When the information protection ID is absent, a wildcard value is used.

Here, the information protection ID indicates, for example, a password in the case of a file sharing application. Also, in the case of using the information protection ID, only a user having the same ID may be discovered.

Accordingly, the same P2P applications may be easily and securely discovered and connected through the information protection ID.

The application driving time point may be configured as a code in which a current time is digitalized to a week, a day, an hour, or a minute. When the application driving time point is not set, a wildcard value is used. Also, the application driving time point is used to automatically select a peer to connect based on the application driving time point.

The application driving place may use GPS coordinates (for example, a digitalized code such as Seoul-si Gangnam-gu->00100), and may use relative coordinates (for example, an AP address having the highest signal strength in a neighboring WLAN AP list) in the case of the absence of a GPS.

The numerical value of the terminal operation state may include measurement information (for example, the number of CPU clocks and the like) of an operation performance capability of a current terminal and a state (for example, a remaining battery amount, a power supply state, an SINR, and the like) of the current terminal. When the numerical value of the terminal operation state is absent, a default value is used.

The service information generating module 813 generates service start information by applying the hash function to the application information extracted from the application information extracting module 811.

Here, the generated service start information may include a service tag, a call setup channel, an information protection certificate, and a leader pseudo-measurement.

The service tag and the information protection certificate may be generated based on the unique tag of the peer-to-peer application, the information protection ID, the application driving time point, and the application driving place in the application information input to the hash function.

Also, the call setup channel may be generated based on the unique tag of the peer-to-peer application and the application driving time point in the application information input to the hash function, and the leader pseudo-measurement may be generated based on terminal operation state information in the application information input to the hash function.

Here, the leader pseudo-measurement is mapped to be high according to an increase in the number of CPU clocks, an increase in a remaining battery amount, and in a case in which power is continuously supplied.

Here, the peer terminal proposed for the quick connection may prevent a terminal from hopping a plurality of call setup channel in the case of connecting applications by limiting a call setup channel of the terminal. Also, in a case in which information protection IDs are different, even though the same application is executed, the service tag and the information protection certificate are set to be different.

When the service start information is generated by the service start information generating module 813, the driving module 815 independently determines a back-off time and starts the determined back-off time.

Here, the back-off time may produce a linear output with respect to a currently set leader pseudo-measurement.

The driving module 815 starts the back-off time and then determines whether at least one another peer terminal corresponding to the service start information of the peer terminal is present through the communication unit 820.

Here, determining whether the at least one other peer terminal corresponding to the service start information is present may determine that the at least one other peer terminal corresponding to the service start information is present when at least one of the call setup channel, the service tag, and the information protection certificate is identical to a call setup channel, a service tag, and an information protection certificate of the at least one other peer terminal.

When the at least one other peer terminal corresponding to the service start information of the peer terminal is determined to be present through the communication unit 820, the driving module 815 suspends the back-off time.

Here, when the at least one other peer terminal corresponding to the service start information of the peer terminal is determined to be absent, the driving module 815 determines whether the back-off time is terminated. When the back-off time is terminated, the driving module 815 sets the peer terminal as a leader terminal and waits for a connection of at least one another peer terminal.

When the at least one other peer terminal corresponding to the service start information is present or connected, the driving module 815 receives and thereby compares a leader pseudo-measurement from each of the at least one other peer terminal and then sets a peer terminal having the highest leader pseudo-measurement as the leader terminal and sets a remaining peer terminal as a member terminal.

Here, when at least two peer terminals having the same leader pseudo-measurement are present, the driving module 815 extracts the peer terminal having the highest leader pseudo-measurement by continuously resetting the leader pseudo-measurement until the same leader pseudo-measurement does not occur using a random number generation algorithm and sets the extracted peer terminal as the leader terminal.

Also, when the peer terminal performs a function of the leader terminal, the driving module 815 monitors operation situation information of the leader terminal. Here, the operation situation information may include, for example, an SINR, a battery capacity, peer-to-peer application operation information, and the like.

The driving module 815 determines whether the explicit termination of the leader terminal is sensed while monitoring the operation situation information of the leader terminal.

Here, a case in which the explicit termination of the leader terminal is sensed includes, for example, a case in which an SINR of the leader terminal is less than or equal to a predetermined value due to a far distance between the plurality of member terminals, a case in which the battery capacity of the leader terminal is less than or equal to a predetermined value, a case in which a peer-to-peer application of the leader terminal is terminated, and the like

When the explicit termination of the leader terminal is sensed, the driving module 815 determines a leader migration and receives a leader pseudo-measurement from each of the plurality of member terminals and then selects a member terminal having the highest leader pseudo-measurement based on the received leader pseudo-measurements.

Next, the driving module 815 transmits a leader acceptance request message to the selected member terminal through the communication unit 820 and determines whether a leader acceptance message is received in response to the leader acceptance request message through the communication unit 820.

When the leader acceptance message is not received, the driving module 815 selects a member terminal having a second highest leader pseudo-measurement and transmits the leader acceptance request message to the selected member terminal and determines whether an acceptance message is received in response to the leader acceptance request message through the communication unit 820.

When the acceptance message is received in response to the leader acceptance request message, the driving module 815 provides a security key and network setting information used for a current connection to the member terminal having transmitted the leader acceptance message.

Next, the driving module 815 transmits a connection cancellation message to all of the member terminals through the communication unit 820 and cancels the connection.

As described above, in a case in which the leader terminal is explicitly terminated, a topology between already connected WLAN peer-to-peer applications may be maintained through migration of a leader and thus, it is possible to solve the conventional issue that the already connected peer-to-peer connection is disconnected when the leader terminal is excluded from the topology.

Also, when the peer terminal performs a function of the member terminal, the driving module 815 starts a local timer and determines whether a beacon signal is received from the leader terminal.

Here, the member terminal drives the local timer in order to determine implicit termination of the leader terminal (for example, sudden power down of the leader terminal, a network partition by a relocation of the leader terminal, and the like).

Here, the beacon signal indicates a signal periodically broadcasted by the leader terminal in order to inform the presence of the leader terminal.

When the beacon signal is received from the leader terminal through the communication unit 820, the driving module 815 resets the local timer and restarts the local timer and determines again whether the beacon signal is received.

Here, when the beacon signal is not received until the local timer is terminated, the driving module 815 cancels the connection with the leader terminal and starts a back-off time.

Here, the back-off time refers to a timer that produces a linear output with respect to a currently set leader pseudo-measurement.

The driving module 815 starts the back-off time and then determines whether at least one another peer terminal corresponding to the service start information is present.

Here, determining whether at least one other member terminal corresponding to the service start information is present may determine that the at least one other member terminal corresponding to the service start information is present when at least one of the call setup channel, the service tag, and the information protection certificate is identical to at least one of a call setup channel, a service tag, and an information protection certificate of the at least one other member terminal.

When it is determined that the at least one other member terminal corresponding to the service start information of the member terminal is present, the driving module 815 suspends the back-off time.

Here, when the at least one other peer terminal corresponding to the service start information is determined to be absent until the back-off time is terminated, the driving module 815 sets the member terminal as the leader terminal and determines whether at least one another member terminal is connected.

When the at least one other member terminal corresponding to the service start information is present or when the at least one other peer terminal is connected, the driving module 815 receives and thereby compares a leader pseudo-measurement from each of the at least one other member terminal or the at least one other peer terminal and then sets, as the leader terminal, a terminal having the highest leader pseudo-measurement and sets a remaining terminal as the member terminal.

Here, when at least two terminals having the same leader pseudo-measurement are present, the driving module 815 extracts the terminal having the highest leader pseudo-measurement by continuously resetting the leader pseudo-measurement until the same leader pseudo-measurement does not occur using a random number generation algorithm and sets the extracted terminal as the leader terminal.

Here, a messaging service, sharing of music, sharing of files, sharing of UCC, multimedia streaming, and the like are performed between the set leader terminal and member terminal. Here, a connection of applications having different service information is restricted even though the applications are present in the same channel.

As described above, in a case in which the leader terminal is implicitly terminated, a topology between already connected WLAN peer-to-peer applications may be maintained through reselection of a leader and thus, it is possible to solve the conventional issue that the already connected peer-to-peer connection is disconnected when the leader terminal is excluded from the topology.

Here, communication between peer terminals may be performed using various wireless communication technologies such as 802.11x (for example, 802.11a, 802.11b, 802.11g, 802.11n, 802.11ac, and the like), Bluetooth, ZigBee, UWB, NFC, B-CDMA, and the like.

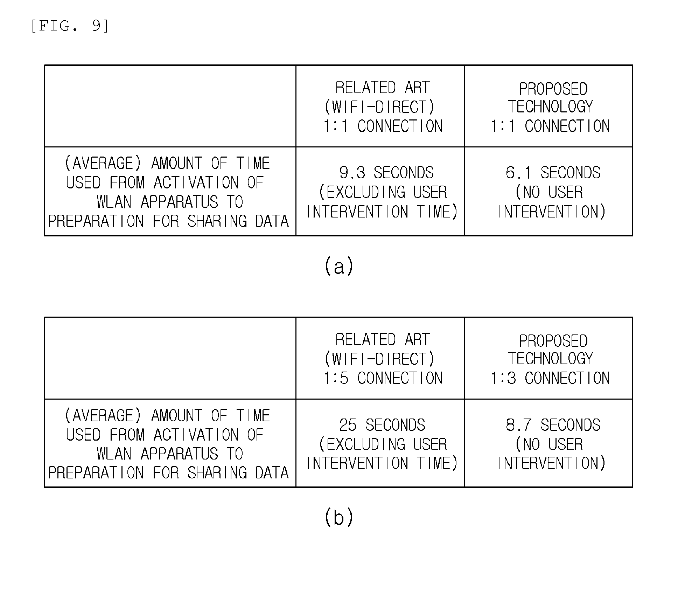

FIG. 9 illustrates a result of evaluating the performance of a method for a connection between peer-to-peer applications based on a WLAN according to an exemplary embodiment of the present invention.

Referring to FIG. 9, a top table (a) shows the average amount of time used from activation of a WLAN apparatus to preparation for sharing data in a case in which WLAN-based peer-to-peer applications according to a related art (WiFi-Direct) are connected based on 1:1 and in a case in which WLAN-based peer-to-peer applications according to an exemplary embodiment of the present invention are connected based on 1:1.

Specifically, in a case in which the WLAN-based peer-to-peer applications according to the related art are connected based on 1:1, it can be verified that the average amount of time used from activation of the WLAN apparatus to preparation for sharing data was 9.3 seconds.

Here, a user intervention time was not included in the average amount of time used.

In a case in which the WLAN-based peer-to-peer applications according to an exemplary embodiment of the present invention is connected based on 1:1, the average amount of time used from activation of the WLAN apparatus to preparation for sharing data was 6.1 seconds. That is, it can be verified that a relatively small amount of time was used compared to the related art.

A bottom table (b) shows the average amount of time used from activation of a WLAN apparatus to preparation for sharing data in a case in which WLAN-based peer-to-peer applications according to a related art (WiFi-Direct) are connected to a plurality of peer-to-peer applications and in a case in which WLAN-based peer-to-peer applications according to an exemplary embodiment of the present invention are connected to a plurality of peer-to-peer applications.

Specifically, in a case in which the WLAN-based peer-to-peer applications according to the related art are connected to the plurality of peer-to-peer applications, it can be verified that the average amount of time used from activation of the WLAN apparatus to preparation for sharing data was 25 seconds.

Here, a user intervention time was not included in the average amount of time used.

In a case in which the WLAN-based peer-to-peer applications according to an exemplary embodiment of the present invention are connected to the plurality of peer-to-peer applications, the average amount of time used from activation of the WLAN apparatus to preparation for sharing data was 8.7 seconds. That is, it can be verified that a relatively small amount of time was used compared to the related art.

Even though the exemplary embodiments have been described, those skilled in the art will understand that various changes and modifications may be made to the present invention without departing from the spirit and scope of the present invention disclosed in the claims.

## Claims

1. A method for a peer-to-peer connection based on a wireless local area network (WLAN) including a plurality of peer terminals, the method comprising:
extracting, by a peer terminal, application information from a peer-to-peer application;
generating, by the peer terminal, service start information from the extracted application information;
determining, by the peer terminal, whether at least one another peer terminal corresponding to the service start information is present during a predetermined standby time; and
setting a terminal having the highest leader pseudo-measurement as a leader terminal and setting a remaining terminal as a member terminal based on a leader pseudo-measurement included in the service start information and a leader pseudo-measurement received from each of the at least one other peer terminal when the at least one other peer terminal corresponding to the service start information is present.

2. The method of claim 1, wherein the application information includes at least one of a unique tag of the peer-to-peer application, an information protection ID, an application driving time point, an application driving place, and a numerical value of a terminal operation state.

3. The method of claim 1, wherein the leader pseudo-measurement is generated to be high in at least one of a case in which the number of CPU clocks of the peer terminal is large, a case in which a remaining battery amount is large, and a case in which the peer terminal is continuously supplied with power.

4. The method of claim 1, wherein the service start information includes at least one of a call setup channel, a service tag, and an information protection certificate in addition to the leader pseudo-measurement.

5. The method of claim 4, wherein the determining, by the peer terminal, whether at least one another peer terminal corresponding to the service start information is present during a predetermined standby time determines that the at least one other peer terminal corresponding to the service start information is present when at least one of the call setup channel, the service tag, and the information protection certificate is identical to a call setup channel, a service tag, and an information protection certificate of the at least one other peer terminal.

6. The method of claim 1, wherein the determining, by the peer terminal, whether at least one another peer terminal corresponding to the service start information is present during a predetermined standby time determines further comprises:
setting the peer terminal as the leader terminal when the at least one other peer terminal corresponding to the service start information is absent;
determining whether the at least one other peer terminal corresponding to the service start information is connected after setting the peer terminal as the leader terminal; and
setting the terminal having the highest leader pseudo-measurement as the leader terminal and setting the remaining terminal as the member terminal based on a leader pseudo-measurement included in the service start information and a leader pseudo-measurement received from each of the at least one other peer terminal when the at least one other peer terminal is connected.

7. The method of claim 1, wherein the setting the peer terminal having the highest leader pseudo-measurement as the leader terminal sets a predetermined terminal as the leader terminal and sets the other terminal as the member terminal when at least two terminals having the same leader pseudo-measurement are present.

8. A method of maintaining a connection between peer-to-peer applications based on a WLAN including a leader terminal and a plurality of member terminals, the method comprising:
determining, by the leader terminal, a leader migration, receiving a leader pseudo-measurement from each of the plurality of member terminals, and selecting a member terminal having the highest leader pseudo-measurement based on the received leader pseudo-measurements when explicit termination of a leader is sensed;
transmitting, by the leader terminal, a leader acceptance request message to the member terminal having the highest leader pseudo-measurement, and determining whether a leader acceptance message is received in response to the leader acceptance request message; and
providing, by the leader terminal, information used for a current connection to the member terminal having the highest leader pseudo-measurement when the leader acceptance message is received.

9. The method of claim 8, wherein sensing the explicit termination of the leader is sensed as the explicit termination of the leader in at least one of a case in which a signal-to-interference and noise ratio (SINR) of the leader terminal is less than or equal to a predetermined value, a case in which a battery amount of the leader terminal is less than or equal to a predetermined value, and a case in which a peer-to-peer application of the leader terminal is terminated.

10. The method of claim 8, wherein the determining whether the leader acceptance message is received further comprises:
selecting a member terminal having a second highest leader pseudo-measurement when the leader acceptance message is not received;
transmitting the leader acceptance request message to the member terminal having the second highest leader pseudo-measurement, and determining whether the leader acceptance message is received in response to the leader acceptance request message; and
providing information used for a current connection to the member terminal having the second highest leader pseudo-measurement when the leader acceptance message is received.

11. A method of maintaining a connection between peer-to-peer applications based on a WLAN including a leader terminal and a plurality of member terminals, the method comprising:
determining, by a member terminal, whether a beacon signal is received from the leader terminal within a predetermined period of time;
cancelling, by the member terminal, a connection with the leader terminal and determining whether at least one another member terminal corresponding to service start information of the member terminal is present during a predetermined standby time when the beacon signal is not received within the predetermined period of time; and
setting a terminal having the highest leader pseudo-measurement as the leader terminal based on a leader pseudo-measurement included in the service start information and a leader pseudo-measurement received from each of the at least one other member terminal when the at least one other member terminal corresponding to the service start information is present.

12. A WLAN-based peer terminal including a control unit and a communication unit, the peer terminal comprising:
the control unit configured to extract application information from a peer-to-peer application, generate service start information from the extracted application information, determine whether at least one another peer terminal corresponding to the service start information is present during a predetermined standby time through a communication unit, and set a peer terminal having the highest leader pseudo-measurement as a leader terminal based on a leader pseudo-measurement included in the service start information and a leader pseudo-measurement received from each of the at least one other peer terminal when the at least one other peer terminal corresponding to the service start information is present; and
the communication unit configured to receive the service start information from the control unit, receive information regarding whether the at least one other peer terminal corresponding to the service start information is present, and provide the received information to the control unit.

13. The peer terminal of claim 12, wherein the leader pseudo-measurement is generated to be high in at least one of a case in which the number of CPU clocks of the WLAN-based peer terminal is large, a case in which a remaining battery amount is large, and a case in which the peer terminal is continuously supplied with power.

14. The peer terminal of claim 12, wherein the service start information includes at least one of a call setup channel, a service tag, and an information protection certificate in addition to the leader pseudo-measurement, and
when at least one of the call setup channel, the service tag, and the information protection certificate is identical to a call setup channel, a service tag, and an information protection certificate of the at least one other peer terminal, the control unit determines that the other peer terminal corresponding to the service start information is present.

15. The peer terminal of claim 12, wherein when the at least one other peer terminal corresponding to the service start information is absent, the control unit determines whether the at least one other peer terminal corresponding to the service start information is connected after setting the peer terminal as the leader terminal through the communication unit, sets the terminal having the highest leader pseudo-measurement as the leader terminal and sets a remaining terminal as a member terminal based on a leader pseudo-measurement included in the service start information and a leader pseudo-measurement received from each of the at least one other peer terminal through the communication unit when the at least one other peer terminal is connected.

16. The peer terminal of claim 12, wherein the control unit determines a leader migration, receives a leader pseudo-measurement from each of the plurality of member terminals, and selects a member terminal having the highest leader pseudo-measurement based on the received leader pseudo-measurements when explicit termination of a leader is sensed while the peer terminal is performing a function of the leader terminal, and transmits a leader acceptance request message to the member terminal having the highest leader pseudo-measurement through the communication unit, and provides information used for a current connection to the member terminal having the highest leader pseudo-measurement through the communication unit when a leader acceptance message is received in response to the leader acceptance request message.

17. The peer terminal of claim 16, wherein sensing the explicit termination of the leader is sensed as the explicit termination of the leader in at least one of a case in which an SINR of the peer terminal is less than or equal to a predetermined value, a case in which a battery amount of the peer terminal is less than or equal to a predetermined value, and a case in which a peer-to-peer application of the peer terminal is terminated.

18. The peer terminal of claim 12, wherein the control unit cancels a connection with the leader terminal and determines whether at least one another peer terminal corresponding to the service start information is present during a predetermined standby time when the peer terminal is performs a function of a member terminal and when a beacon signal is not received from the leader terminal within a predetermined period of time, and sets a terminal having the highest leader pseudo-measurement as the leader terminal based on a leader pseudo-measurement included in the service start information and a leader pseudo-measurement received from each of the at least one other member terminal when the at least one other peer terminal corresponding to the service start information is present.
